# EUROPEAN PATENT SPECIFICATION

(11) **EP 3 865 714 B1**
(45) Date of publication and mention of the grant of the patent: **21.02.2024**
(21) Application number: 20194438.6
(22) Date of filing: 03.09.2020
(51) Int. Cl.: F15B 1/26, F15B 15/20, F15B 15/22, F15B 11/06, F15B 11/04, F15B 15/14, B23B 31/26, B23Q 1/00, B25B 5/00, F15B 11/064

(54) **ARRANGEMENT COMPRISING AN ACCELERATOR-EQUIPPED PNEUMATIC CYLINDER**
ANORDNUNG UMFASSEND EINEN PNEUMATISCHEN ZYLINDER MIT BESCHLEUNIGER
ARRANGEMENT COMPRENANT UN CYLINDRE PNEUMATIQUE ÉQUIPÉ D'UN ACCÉLÉRATEUR

(30) Priority: 15.02.2020 TW 109201679 U
(43) Date of publication of application: 18.08.2021
(73) Proprietor: CHEN SOUND INDUSTRIAL CO., LTD., Taichung City 429 (TW)
(72) Inventor: SUN, Ying, 429 Taichung City (TW)
(74) Representative: Patentwerk B.V.

(56) References cited:
- DE-A1- 3 228 109
- DE-U1- 20 201 058
- US-A- 2 986 120

## Description

### BACKGROUND OF THE INVENTION

### 1. Field of the Invention:

The present invention relates to an arrangement comprising a pressure source and an accelerator-equipped pneumatic cylinder, and more particularly to a mechanism used in a pneumatic cylinder for accelerated motion.

### 2. Description of the Related Art:

A conventional automated machine tool has a spindle configured to be combined with various tools stored in a tool magazine for various processing operations like milling, drilling, and boring. For such a machine tool to use different tools in a tool magazine, a tool changing mechanism is provided to change tools efficiently. During the tool-changing operation, a tool arm first holds a tool that is now attached to the spindle and a pneumatic cylinder working with a multiplier mechanism performs the unclamping operation to make the tool leave the spindle. Then the tool arm moves the tool away for another tool to install.

Taiwan Patent Publication No. M441540 discloses a multiplier-equipped unclamping cylinder for addressing the problem of the prior art about insufficient unclamping force. It comprises a first actuator unit, a second actuator unit, and an unclamping unit. It uses a first switch and a second switch to switch between selections, so that the first compressed-air source and a second compressed-air source can simultaneously help the unclamping cylinder to intake air or drain air, thereby accelerating its unclamping operation with a multiplied downward force. However, for accelerating the unclamping operation, the conventional unclamping cylinder has to employ two actuator units, as well as two switches and two compressed-air sources. This causes the resulting unclamping cylinder to have numerous components and become complicated in structure, leading to increased costs. Besides, since the compressed-air sources are not stable enough to hold a constant pressure, once the pressure is lowered, the unclamping operation of the unclamping cylinder is degraded. Hence, the prior art needs to be further improved.

In the context of the present invention, reference is made to relevant prior art documents US2986120A, DE3228109A, and DE20201058U, which all relate to an arrangement comprising a pressure source and an accelerator-equipped pneumatic cylinder.

### SUMMARY OF THE INVENTION

To address the foregoing issues, the present invention provides an arrangement comprising a pressure source (P) and an accelerator-equipped pneumatic cylinder according to the appended claim 1. The accelerator-equipped pneumatic cylinder herein features a cylinder block formed with a pressure chamber, and uses a controller to make the pressure chamber and the piston chamber communicated with each other or not. When there is pressure introduced in the pressure chamber and accumulated to a predetermined pressure level, the controller makes the pressure chamber and the piston chamber come into communication with each other, and the accumulated pressure is used to push the pneumatic cylinder at an accelerated speed.

The arrangement of the present invention provides an accelerator-equipped pneumatic cylinder, comprising: a cylinder block, having a piston chamber and a pressure chamber; a switch valve, having a valve seat that is installed in the cylinder block and stands between the piston chamber and the pressure chamber, the valve seat having a channel, a controller being installed in the valve seat for making the piston chamber and the pressure chamber communicated with each other or not by opening or closing the channel; and a pneumatic cylinder, having a piston portion received in the piston chamber, and having a shaft portion extending outward from one side of the piston portion to be exposed outside the cylinder block, so that when the channel is closed by the controller, the piston chamber and the pressure chamber are not communicated with each other, the pressure medium supplied into the pressure chamber by the pressure source is accumulated to a predetermined pressure level, and at a moment when the channel is opened by the controller, the piston chamber and the pressure chamber come into communication with each other, the piston portion is pushed by the pressure medium at the predetermined pressure level, so that the shaft portion is pushed out the piston chamber at an accelerated speed.

Thereby, with the pressure chamber formed in the cylinder block that allows the pressure medium from the pressure source to be introduced and accumulated therein, at the moment when the controller makes the pressure chamber and the piston chamber come into communication with each other, the piston portion is pushed by the pressure medium at the predetermined pressure level and has the shaft portion making a dash outward the piston chamber. In other words, the disclosed cylinder block has the pressure chamber in addition to the piston chamber, and uses the controller to allow the shaft portion to come out the piston chamber with a dash. Even in the event of discontinuation of the external compressed-air source, the accumulated pressure medium can push the shaft portion out the piston chamber. Therefore, the present invention is effective yet involves fewer and simpler components, thereby saving costs.

### BRIEF DESCRIPTION OF THE DRAWINGS

**Fig. 1** is a perspective view of an accelerator-equipped pneumatic cylinder of the present invention.
**Fig. 2** is another perspective view of the accelerator-equipped pneumatic cylinder of the present invention taken from a different angle.
**Fig. 3** is a cross-sectional view of the accelerator-equipped pneumatic cylinder of the present invention.
**Fig. 4** is a cross-sectional view taken along Line 4-4 in FIG. 3.
**Fig. 5** is a partially cut away view of the accelerator-equipped pneumatic cylinder of the present invention particularly showing two communicating holes.
**Fig. 6** is a loop diagram of an accelerator-equipped pneumatic cylinder of the present invention, showing that a piston chamber and a pressure chamber are not communicated with each other and a shaft portion of the pneumatic cylinder is retracted into the piston chamber.
**Fig. 7** , based on FIG. 6, is a loop diagram showing that the piston chamber and the pressure chamber are communicated with each other, and the shaft portion of the pneumatic cylinder extends outside the piston chamber.
**Fig. 8** is an enlarged cut-away view of a part of the accelerator-equipped pneumatic cylinder of the present invention, showing that the piston chamber and the pressure chamber are communicated with each other, and high-pressure medium in the pressure chamber passes through a channel to enter the piston chamber.
**Fig. 9** is an enlarged cross-sectional view of a part of the accelerator-equipped pneumatic cylinder of the present invention, showing that the high-pressure medium pushes the piston portion at an accelerated speed to make the shaft portion extend outside the piston chamber.

### DETAILED DESCRIPTION OF THE INVENTION

The following preferred embodiments when read with the accompanying drawings are made to clearly exhibit the above-mentioned and other technical contents, features and effects of the present invention. Through the exposition by means of the specific embodiments, people would further understand the technical means and effects the present invention adopts to achieve the above-indicated objectives. However, the accompanying drawings are intended for reference and illustration, but not to limit the present invention and are not made to scale.

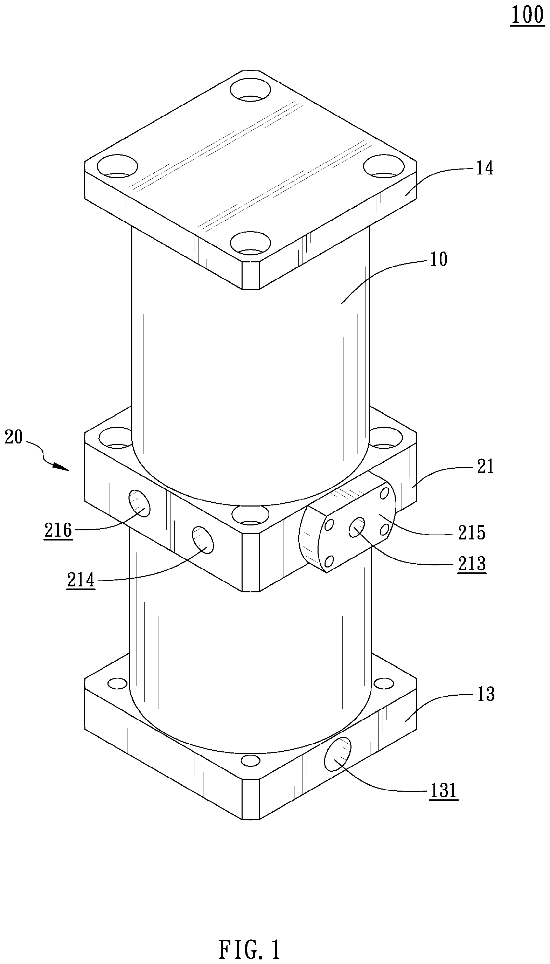

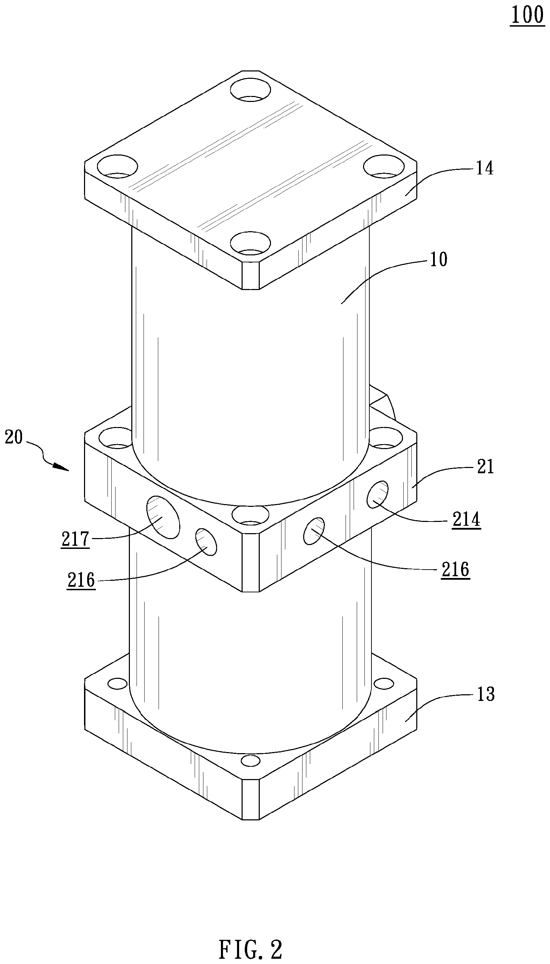

Referring to FIG. **1** through FIG. **9****,** in one preferred embodiment, the present invention provides an accelerator-equipped pneumatic cylinder **100.** The pneumatic cylinder **100** in the present embodiment is used as an unclamping cylinder, but not limited thereto. The pneumatic cylinder **100** primarily comprises a cylinder block **10,** a switch valve **20,** and a pneumatic cylinder **30.**

The cylinder block **10** has a piston chamber **11** and a pressure chamber **12.** In the present embodiment, the cylinder block **10** is columnar. The cylinder block **10** has one end corresponding to the piston chamber **11** provided with a first end cap **13,** and has one end corresponding to the pressure chamber **12** provided with a second end cap **14.** In the present embodiment, the first end cap **13** is shaped as a rectangular block, and the second end cap **14** is also shaped as a rectangular block. The first end cap **13** is formed with a first through hole **131** that is communicated with the piston chamber **11.**

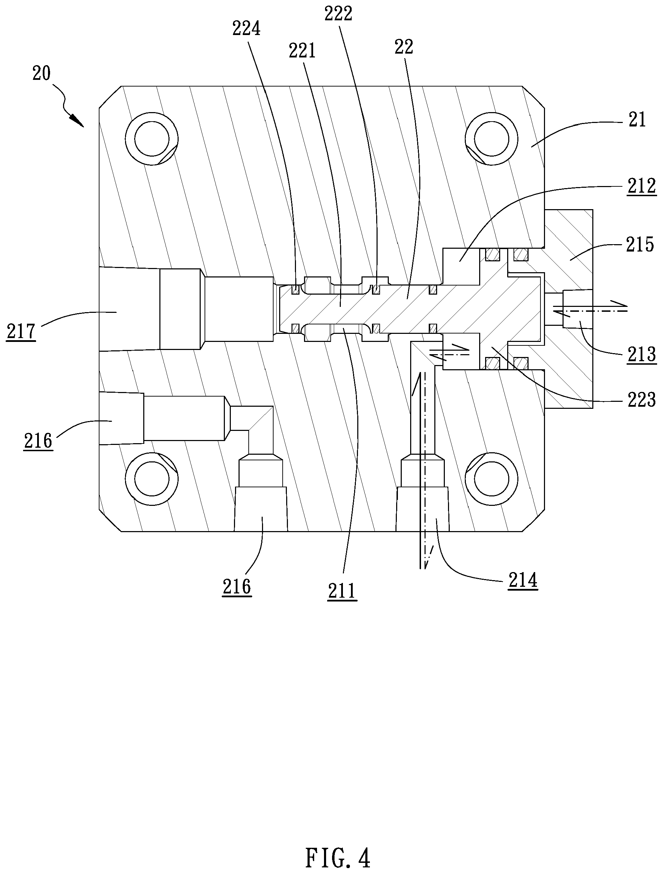

The switch valve **20** has a valve seat **21** such installed in the cylinder block **10** that it stands between the piston chamber **11** and the pressure chamber **12.** The valve seat **21** has a channel **211.** In the present embodiment, the valve seat **21** defines therein an operation chamber **212,** whose two ends are provided with a first runner **213** and a second runner **214.** The term 'runner' has in the context of the present invention the technical meaning of a 'conduit which is suitable to run a fluid through'. The runners **213, 214** having the same technical meaning as a conduit is furthermore depicted as such in the appended figures 4, 6 and 7. The operation chamber **212** is communicated with the outside of the valve seat **21** through the first runner **213** and the second runner **214,** respectively (as shown in **FIGs. 1** and **4**). In the present embodiment, the valve seat **21** is shaped as a rectangular block.

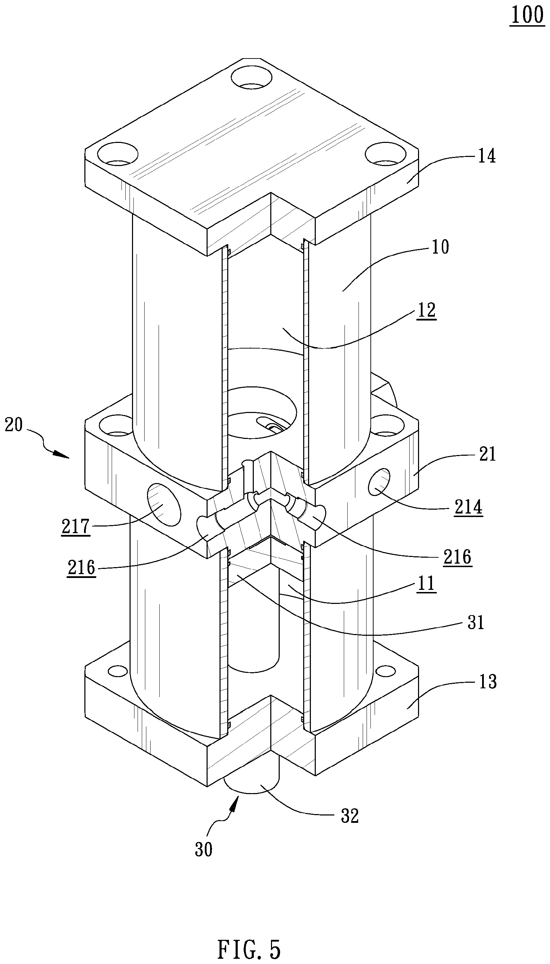

The valve seat **21** has a flange **215** positionally corresponding to the first runner **213.** The flange **215** protrudes from the valve seat **21.** The valve seat **21** in the present embodiment has two communicating holes **216.** Both of the two communicating holes **216** are communicated with the pressure chamber **12** (as shown in **FIG. 5**). The communicating holes **216** allow the pressure source P to supply a pressure medium into the pressure chamber **12** where the pressure medium is accumulated to a predetermined pressure level, and also allow the pressure medium in the pressure chamber **12** to be released. The valve seat **21** further has a second through hole **217** communicated with the channel **211.** In the present embodiment, the second through hole **217** and the operation chamber **212** are at two ends of the channel **211,** respectively. Therein, the second through hole **217** and the channel **211** may be communicated with each other, while the operation chamber **212** and the channel **211** are not communicated with each other.

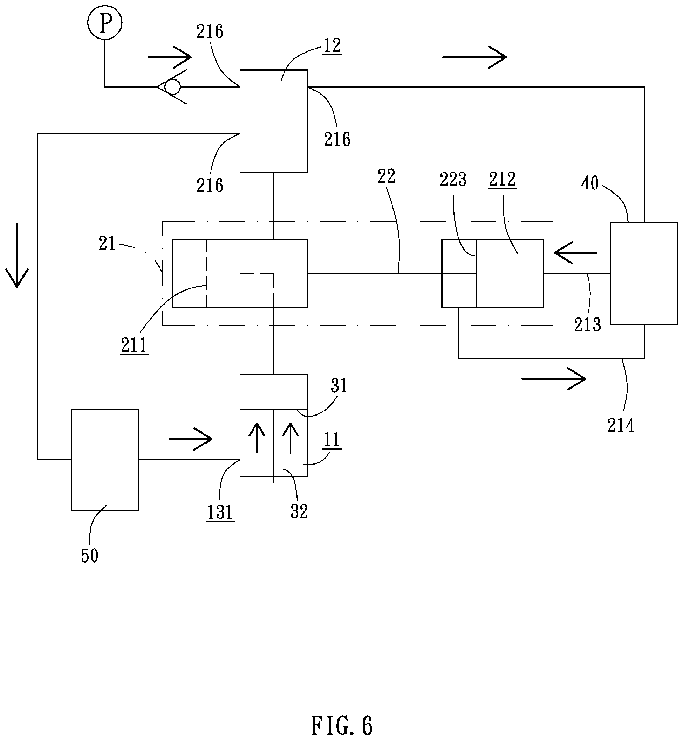

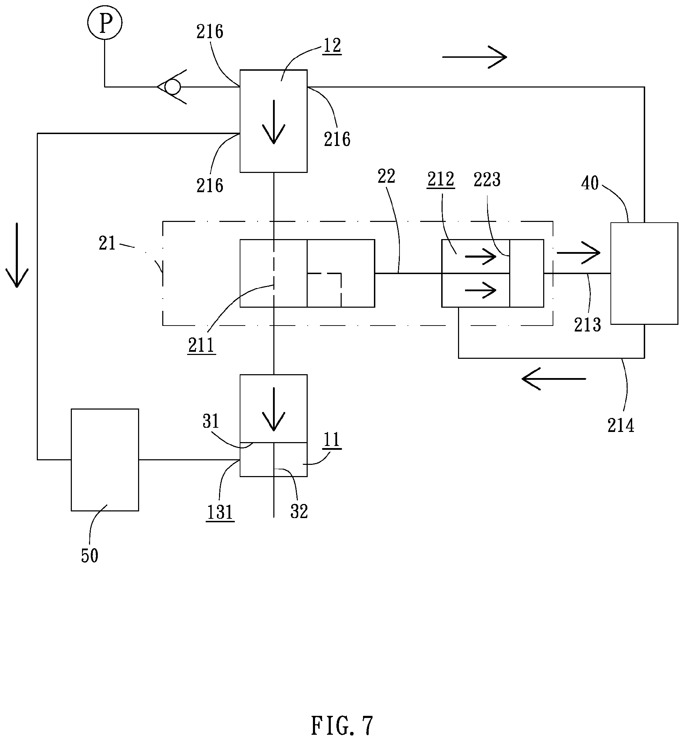

The pressure source P (as shown in **FIGs. 6** and **7**) in the present invention refers to a source of pressure medium, or referred to as a high-pressure fluid, that provides a driving force and the pressure medium is the high-pressure fluid. The high-pressure fluid may be, for example, high-pressure gas (providing a pneumatic force) or high-pressure liquid (providing a hydraulic force). In the present embodiment, the pressure source **P** supplies high-pressure gas. Additionally, the pressure source **P** is configured to not only push the drive portion 223, but also act as a force source for other components. For example, the pressure source **P** supplies the pressure medium into the pressure chamber **12** where the pressure medium is accumulated to the predetermined pressure level.

The switch valve **20** has a controller installed in the valve seat **21.** The controller serves to open and close the channel **211,** thereby making the piston chamber **11** and the pressure chamber **12** communicated with each other or making the piston chamber **11** and the pressure chamber **12** not communicated with each other. In the present embodiment, the controller is a valve stem **22.** The valve stem **22** is installed in the valve seat **21** in an axially movable manner. The valve stem **22** pass through the channel **211.** The valve stem **22** has a small-diameter segment **221,** which is formed on the valve stem **22** by reducing the diameter of the valve stem **22** itself. The small-diameter segment **221** is positionally corresponding to the channel **211.** The valve stem **22** has one end with the small-diameter segment **221** provided with a front retaining ring **222.** The valve stem **22** moves axially in the valve seat **21** to make the front retaining ring **222** enter the channel **211,** thereby closing the channel **211,** or to retract the front retaining ring **222** from the channel **211,** thereby allowing the small-diameter segment **221** to make the channel **211** open.

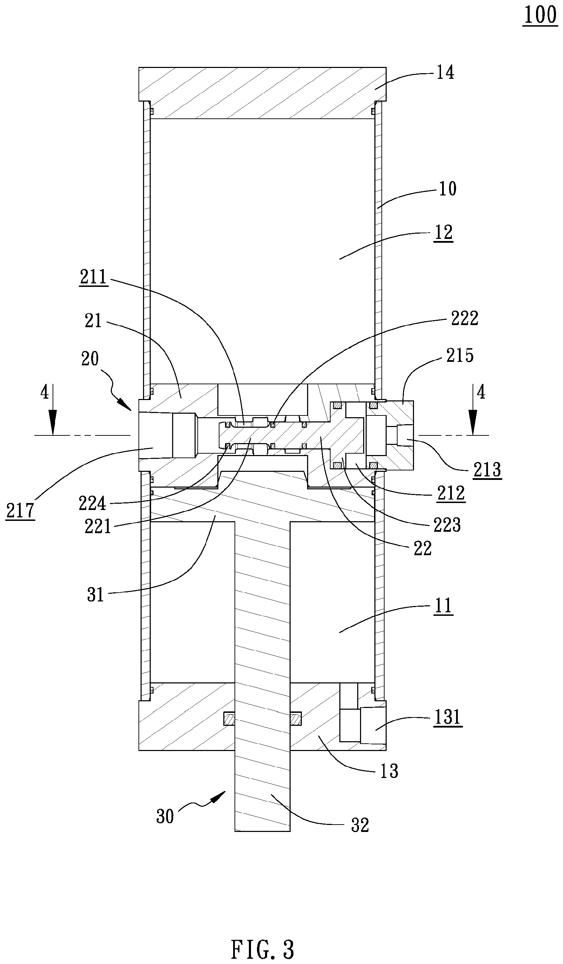

In the present embodiment, the valve stem **22** has one end provided with a drive portion **223.** The drive portion **223** is received in the operation chamber **212.** The pressure source **P** when supplying the pressure medium into the operation chamber **212** through the first runner **213** pushes the drive portion **223** to drive the valve stem **22** to axially move, thereby making the front retaining ring **222** close the channel **211** (as shown in **FIG. 6**). Alternatively, the pressure source **P** when supplying the pressure medium into the operation chamber **212** through the second runner **214,** pushes the drive portion **223** in an opposite direction to make the valve stem **22** axially move and in turn retract the front retaining ring **222** from the channel **211,** thereby opening the channel **211** (as shown in **FIG. 7**). Moreover, in the present embodiment, the valve stem **22** is provided with a rear retaining ring **224** at its end opposite to the small-diameter segment **221,** so that when the valve stem **22** axially moves to make the front retaining ring **222** close the channel **211,** the channel **211** and the second through hole **217** come into communication with each other. At this time, the channel **211,** with the second through hole **217** acting as its return passage, start to drain the high-pressure gas (as shown in **FIG. 3**). On the other hand, when the valve stem **22** axially moves to retract the front retaining ring **222** from the channel **211** and thereby open the channel **211,** the rear retaining ring **224** closes the second through hole **217,** so as to prevent the channel **211** from communication with the second through hole **217.** At this time, the channel **211** is prevented from draining the high-pressure gas through the second through hole **217** (as shown in **FIG. 4**).

The pneumatic cylinder **30** has a piston portion **31** received in the piston chamber **11** and a shaft portion **32** extending outward the cylinder block **10** from one side of the piston portion **31.** When the channel **211** is closed by the controller and the piston chamber **11** and the pressure chamber **12** are not communicated with each other, the pressure chamber **12** receives the pressure medium from the pressure source **P** that is accumulated to the predetermined pressure level. At the moment when the channel **211** is opened by the controller and the piston chamber **11** and the pressure chamber **12** come into communication, the piston portion **31** is pushed by the pressure medium at the predetermined pressure level at an accelerated speed, so the shaft portion **32** is pushed outside the piston chamber **11.** The dash performed by the shaft portion **32** is thus useful to unclamp a tool. The predetermined pressure level refers to a pressure level that is high enough to make the shaft portion **32** perform such dash when it comes out from the piston chamber **11** pressure. The predetermined pressure level is not limited to any constant but determined according to practical unclamping needs.

In the present embodiment, the first runner **213** and the second runner **214** are connected to a solenoid valve and further connected to the pressure chamber **12** through the solenoid valve. The solenoid valve mainly serves to control whether the pressure source **P** supplies the pressure by way of the first runner **213** or by way of the second runner **214.** In the present embodiment, the solenoid valve is a two-way solenoid valve **40** (as shown in **FIGs. 6** and **7**), and is particularly a five-mouth three-place solenoid valve. In the present embodiment, the first through hole **131** formed on the first end cap **13** is communicated with the pressure chamber **12,** and a one-way solenoid valve **50** (as shown in **FIGs. 6** and **7**) is arranged between the first through hole **131** and the pressure chamber **12.** In the present embodiment, the pressure source P is connected to a communicating hole **216,** while the two-way solenoid valve **40** and the one-way solenoid valve **50** are connected to the other communicating hole **216,** respectively. While the two-way solenoid valve **40** and the one-way solenoid valve **50** are connected to the communicating hole **216** at different sites as depicted in **FIGs. 6** and **7****,** this is only for illustration and they are actually connected to the same communicating hole **216.**

When powered and magnetically excited, the two-way solenoid valve **40** introduces the pressure medium from the pressure source **P** into the operation chamber **212** through the first runner **213** so as to push the drive portion **223** (as shown in **FIG. 6**). The valve stem **22** is then driven to axially move and make the front retaining ring **222** enter the channel **211** to close the channel **211** (as shown in **FIG. 3**). The high-pressure gas in the operation chamber **212** is drained through the second runner **214.** At this time, the shaft portion **32** returns to the piston chamber **11,** and the high-pressure gas supplied by the pressure source **P** into the pressure chamber **12** is allowed to build up to the predetermined pressure level.

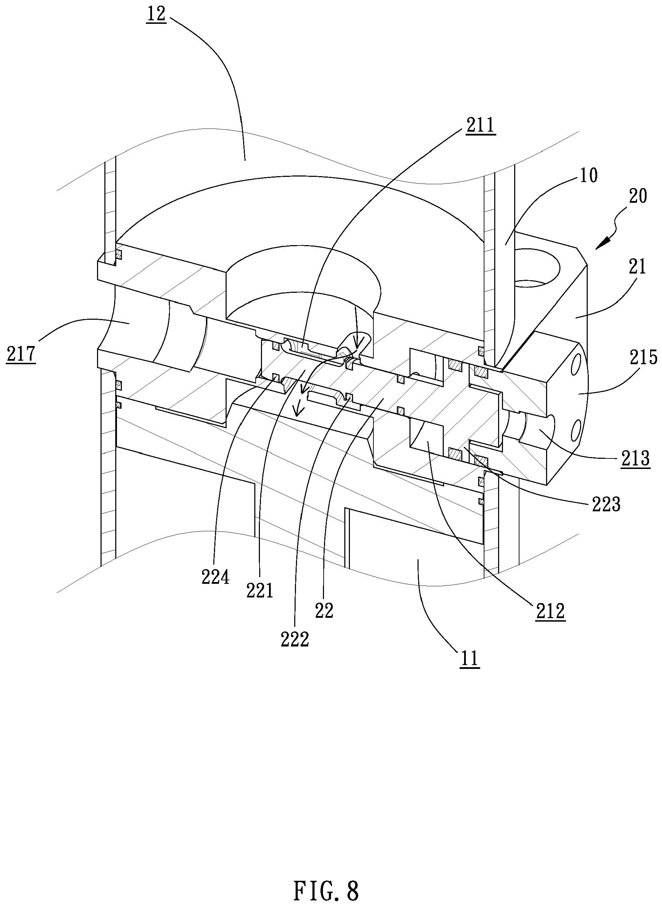

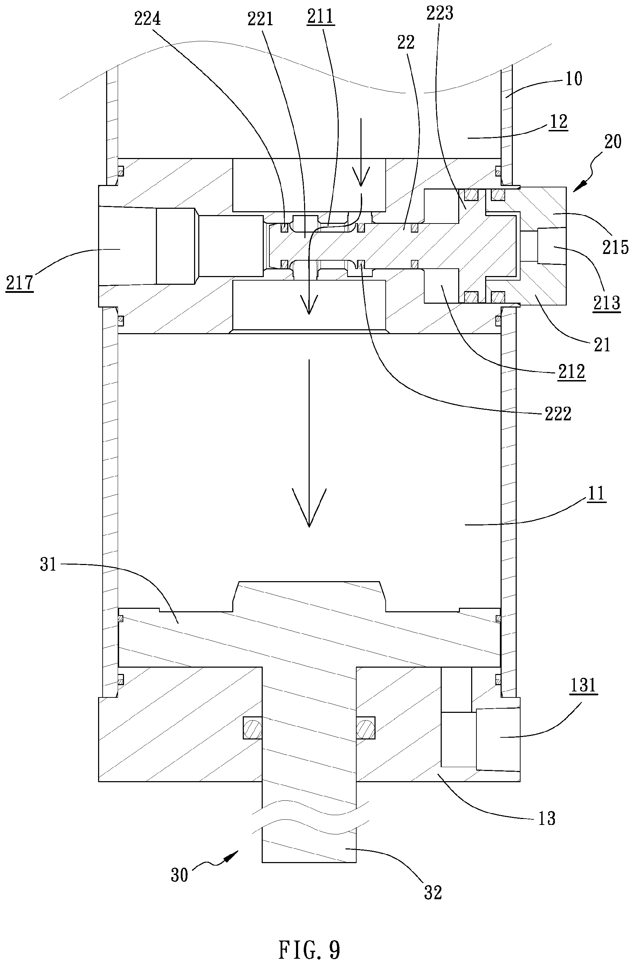

For unclamping operation, as shown in **FIG. 7****,** the two-way solenoid valve **40** is power and magnetically excited in an opposite direction, so the pressure source **P** supplies the high-pressure gas into the operation chamber **212** through the second runner **214** instead to push the drive portion **223** reversely. At this time, the high-press gas in the operation chamber **212** is drained through the first runner **213.** This makes the valve stem **22** to move axially and thereby retracts the front retaining ring **222** from the channel **211,** thereby opening the channel **211**(as shown in **FIGs. 8** and **9**). At the moment when the channel **211** is opened and the piston chamber **11** and the pressure chamber **12** come into communication with each other, the piston portion **31** is pushed by the high-pressure gas at the predetermined pressure level in a very short period, so the shaft portion **32** makes the dash outward the piston chamber **11** for unclamping a tool. At the time the shaft portion **32** is pushed out the piston chamber **11** for the unclamping operation, the one-way solenoid valve **50** makes the pressure source **P** and the first through hole **131** become communicated with each other, thereby forming a return passage that enables gas release through the first through hole **131.**

Alternatively, before the shaft portion **32** is pushed out the piston chamber **11** for unclamping operation, the one-way solenoid valve **50** may make the pressure source **P** and the first through hole **131** come into communication with each other in advance, so that the high-pressure gas can be drained from the piston chamber **11** through the first through hole **131.** This allows the shaft portion **32** come out the piston chamber **11** and make the dash more effectively. Furthermore, while the one-way solenoid valve **50** in the depicted embodiment is a stand-alone device that is desiccated in gas release, there may be other embodiments where a solenoid valve is additionally attached to the switch valve **20** for providing the same function of gas release.

After the unclamping operation is completed, the two-way solenoid valve **40** introduces the pressure medium from the pressure source **P** into the operation chamber **212** through the first runner **213,** so as to push the drive portion **223,** which in turn drives the valve stem **22** to move axially to make the front retaining ring **222** enter the channel **211** again, thereby closing the channel **211** (as shown in **FIG. 3**). The one-way solenoid valve **50** introduces the pressure medium from the pressure source **P** into the piston chamber **11** reversely to push the piston portion **31,** so as to return the shaft portion **32** into the piston chamber **11** (as shown in **FIG. 6**), and form a return passage in the second through hole **217** for gas release, thereby returning to the initial state prior to the unclamping operation.

As can be seen from the above description, the present invention features that with the cylinder block **10** having the pressure chamber **12,** the pressure medium from the pressure source **P** can be introduced into the pressure chamber **12** in advance and build up to the predetermined pressure level, so as to act as a driving force that pushes the shaft portion **32** out the piston chamber **11.** In its application for unclamping operation, when a tool attached to a spindle (not shown) is to be changed, the controller (i.e. the valve stem **22** as describe previously) makes the pressure chamber **12** and the piston chamber **11** come into communication with each other. At this time, the piston portion **31** is pushed out the piston chamber **11** by the pressure medium at an accelerated speed in a very short period and thereby makes a dash to fulfill the unclamping operation. The disclosed cylinder block **10** has the pressure chamber **12** in addition to the piston chamber **11,** and uses the controller to allow the shaft portion **32** to come out the piston chamber **11** with a dash. As compared to the foregoing conventional unclamping cylinder that has to be equipped with two actuator units and uses to switches as well as two pressure sources, the present invention involves fewer and simpler components, thereby saving costs. Additionally, since the pressure chamber **12** of the cylinder block **10** allows the pressure medium from the pressure source **P** to be introduced and accumulated to the predetermined pressure level prior to the intended unclamping operation, even in the event of failure or shortage of the external compressed-air source, the pressure medium accumulated in the pressure chamber **12** can be used to push the shaft portion **32** out the piston chamber **11,** thereby effectively preventing failure of the unclamping operation.

The present invention has been described with reference to the preferred embodiments and it is understood that the embodiments are not intended to limit the scope of the present invention which is defined by the appended claims.

## Claims

1. An arrangement comprising a pressure source (P) and an accelerator-equipped pneumatic cylinder (100), which is connected to the pressure source (P) and which is driven by a pressure medium supplied by the pressure source (P), wherein the accelerator-equipped pneumatic cylinder comprises:
a cylinder block (10), having a piston chamber (11) and a pressure chamber (12); a switch valve (20), having a valve seat (21) installed in the cylinder block (10) and between the piston chamber (11) and the pressure chamber (12), the valve seat (21) having a channel (211) and receiving a controller that makes the piston chamber (11) and the pressure chamber (12) communicated with each other or not by opening or closing the channel (211); and
a pneumatic cylinder (30), having a piston portion (31) received in the piston chamber (11), and having a shaft portion (32) extending outward from one side of the piston portion (31) to be exposed outside the cylinder block (10), so that when the channel (211) is closed by the controller, the piston chamber (11) and the pressure chamber (12) are not communicated with each other, the pressure medium supplied into the pressure chamber (12) by the pressure source (P) is accumulated to a predetermined pressure level, and at a moment when the channel (211) is opened by the controller, the piston chamber (11) and the pressure chamber (12) come into communication with each other, the piston portion (31) is pushed by the pressure medium at the predetermined pressure level, so that the shaft portion (32) is pushed out the piston chamber (11) at an accelerated speed,
wherein the controller is a valve stem (22) having a diameter, and the valve stem (22) is received in the valve seat (21) in an axially movable manner and passes through the channel (211), wherein the valve stem (22) has a small-diameter segment (221) along which the diameter of the valve stem is reduced and the small-diameter segment (221) is positionally corresponding to the channel (211), the valve stem (22) having one end adjacent to the small-diameter segment (221) provided with a front retaining ring (222) so that when the valve stem (22) axially moves in the valve seat (21) to make the front retaining ring (222) enter the channel (211), the channel (211) is closed, and when the front retaining ring (222) is retracted from the channel (211), the small-diameter segment (221) allow the channel (211) to become open,
wherein in the valve seat (21) there is defined an operation chamber (212), whose two ends provided with a first runner (213) and a second runner (214) respectively, to communicate with the outside of the valve seat (21), in which the valve stem (22) has one end provided with a drive portion (223) that is received in the operation chamber (212), so that the pressure source (P) is configured to enter the operation chamber (212) through the first runner (213) and to push the drive portion (223) and then drive the valve stem (22) to axially move to make the front retaining ring (222) enter the channel (211) so as to close the channel (211), and
**characterised in that** the pressure source (P) is also configured to enter the operation chamber (212) through the second runner (214) to reversely push the drive portion (223) and then drive the valve stem (22) to axially move to retract the front retaining ring (222) from the channel (211) so as to open the channel (211), and
**in that** the first runner (213) and the second runner (214) are connected to a solenoid valve (40) which solenoid valve (40) is further connected to the pressure chamber (12), so that the solenoid valve (40) controls the pressure medium supplied by the pressure source (P) to supply the pressure through the first runner (213) or through the second runner (214).

2. The arrangement of claim 1, wherein the valve seat (21) has a flange (215) at the first runner (213), and the flange (215) protrudes from the valve seat (21).

3. The arrangement of claim 1, wherein the cylinder block (10) has a first end cap (13) at one end of the piston chamber (11), and the cylinder block (10) has a second end cap (14) at one end of the pressure chamber (12), wherein the first end cap (13) has a first through hole (131) communicated with the piston chamber (11), and the valve seat (21) has a second through hole (217) communicated with the channel (211).

4. The arrangement of claim 3, wherein the first through hole (131) is communicated with the pressure chamber (12), and a one-way solenoid valve (50) is provided between the first through hole (131) and the pressure chamber (12), so as to communicate the pressure source (P) with the first through hole (131), and thereby allow a return passage to be formed at the moment when the shaft portion (32) is extended outside the piston chamber (11) at the accelerated speed, or to connect the pressure source (P) to the piston chamber (11) in an opposite direction so as to push the piston portion (31) to retract into the piston chamber (11), and thereby allow a return passage to be formed in the second through hole (217).

5. The arrangement of claim 4, wherein the valve stem (22) has a rear retaining ring (224) at one end adjacent to the small-diameter segment (221) and opposite to the front retaining ring (222), so that when the valve stem (22) axially moves to make the front retaining ring (222) close the channel (211), the channel (211) becomes communicated with the second through hole (217), and when the valve stem (22) axially moves to retract the front retaining ring (222) from the channel (211) to make the channel (211) open, the rear retaining ring (224) closes the second through hole (217) and make the channel (211) and the second through hole (217) not communicated with each other.

6. The arrangement of claim 1, wherein the valve seat (21) has a communicating hole (216) communicating with the pressure chamber (12), and the communicating hole (216) is configured to allow the pressure source (P) to supply the pressure into the pressure chamber (12), or allow the pressure at the predetermined pressure to be released from the pressure chamber (12).

## Patentansprüche

1. Eine Anordnung umfasst eine Druckquelle (P) und einen mit einem Beschleuniger ausgestatteten Pneumatikzylinder (100), der mit der Druckquelle (P) verbunden ist und der durch ein von der Druckquelle (P) bereitgestelltes Druckmedium angetrieben wird, wobei der mit einem Beschleuniger ausgestattete Pneumatikzylinder Folgendes umfasst:
einen Zylinderblock (10), der eine Kolbenkammer (11) und eine Druckkammer (12) aufweist; ein Schaltventil (20), das einen im Zylinderblock (10) und zwischen der Kolbenkammer (11) und der Druckkammer (12) eingebauten Ventilsitz (21) aufweist, wobei der Ventilsitz (21) einen Kanal (211) aufweist und eine Steuerung aufnimmt, die dafür sorgt, dass die Kolbenkammer (11) und die Druckkammer (12) miteinander verbunden werden oder nicht, indem der Kanal (211) geöffnet oder geschlossen wird; und
einen Pneumatikzylinder (30), der einen Kolbenabschnitt (31), der in der Kolbenkammer (11) aufgenommen ist, und einen Schaftabschnitt (32), der sich von einer Seite des Kolbenabschnitts (31) nach außen erstreckt, um außerhalb des Zylinderblocks (10) freizuliegen, aufweist, sodass, wenn der Kanal (211) durch die Steuerung geschlossen wurde, die Kolbenkammer (11) und die Druckkammer (12) nicht miteinander verbunden sind, das in die Druckkammer (12) eingeführte Druckmedium durch die Druckquelle (P) auf ein vorgegebenes Druckniveau akkumuliert wird und in dem Moment, in dem der Kanal (211) durch die Steuerung geöffnet wird, die Kolbenkammer (11) und die Druckkammer (12) miteinander in Verbindung kommen, der Kolbenabschnitt (31) durch das Druckmedium auf das vorgegebene Druckniveau gedrückt wird, sodass der Schaftabschnitt (32) mit beschleunigter Geschwindigkeit aus der Kolbenkammer (11) herausgeschoben wird,
wobei die Steuerung ein Ventilschaft (22) mit einem Durchmesser ist und der Ventilschaft (22) axial beweglich im Ventilsitz (21) aufgenommen ist und sich durch den Kanal (211) hindurchbewegt, wobei der Ventilschaft (22) ein Segment mit kleinem Durchmesser (221) aufweist, entlang dem der Durchmesser des Ventilschafts verringert ist, und das Segment mit kleinem Durchmesser (221) in seiner Position mit dem Kanal (211) korrespondiert, wobei der Ventilschaft (22) ein Ende aufweist, das an das Segment mit kleinem Durchmesser (221), welches mit einem vorderen Sicherungsring (222) versehen ist, angrenzt, sodass bei axialer Bewegung des Ventilschafts (22) im Ventilsitz (21), durch die der vordere Sicherungsring (222) in den Kanal (211) eintritt, der Kanal (211) geschlossen wird, und, wenn der vordere Sicherungsring (222) aus dem Kanal (211) zurückgezogen wird, das Segment mit kleinem Durchmesser (221) ermöglicht, dass der Kanal (211) geöffnet wird,
wobei im Ventilsitz (21) eine Betriebskammer (212) definiert ist, dessen beide Enden jeweils mit einem ersten Läufer (213) und einem zweiten Läufer (214) versehen sind, um mit der Außenseite des Ventilsitzes (21) in Verbindung zu stehen, wobei der Ventilschaft (22) ein Ende, das mit einem Antriebsabschnitt (223), der in der Betriebskammer (212) aufgenommen ist, aufweist, sodass die Druckquelle (P) so konfiguriert ist, dass sie durch den ersten Läufer (213) in die Betriebskammer (212) eintritt und den Antriebsabschnitt (223) drückt und dann den Ventilschaft (22) so antreibt, dass er sich axial bewegt, um zu bewirken, dass der vordere Sicherungsring (222) in den Kanal (211) eintritt, um so den Kanal (211) zu verschließen, **dadurch gekennzeichnet**
**dass** die Druckquelle (P) außerdem so konfiguriert ist, dass sie durch den zweiten Läufer (214) in die Betriebskammer (212) eintritt, um den Antriebsabschnitt (223) in umgekehrter Richtung zu drücken und dann den Ventilschaft (22) so anzutreiben, dass er sich axial bewegt, um den vorderen Sicherungsring (222) aus dem Kanal (211) zurückziehen und somit den Kanal (211) zu öffnen,
und **dass** der erste Läufer (213) und der zweite Läufer (214) mit einem Magnetventil (40) verbunden sind, wobei das Magnetventil (40) außerdem mit der Druckkammer (12) verbunden ist, sodass das Magnetventil (40) das von der Druckquelle (P) bereitgestellte Druckmedium steuert, um den Druck durch den ersten Läufer (213) oder durch den zweiten Läufer (214) bereitzustellen.

2. Anordnung nach Anspruch 1, wobei der Ventilsitz (21) am ersten Läufer (213) einen Flansch (215) aufweist und der Flansch (215) vom Ventilsitz (21) vorsteht.

3. Anordnung nach Anspruch 1, wobei der Zylinderblock (10) eine erste Endkappe (13) an einem Ende der Kolbenkammer (11) und der Zylinderblock (10) eine zweite Endkappe (14) an einem Ende der Druckkammer (12) aufweist, wobei die erste Endkappe (13) ein erstes Durchgangsloch (131) aufweist, das mit der Kolbenkammer (11) in Verbindung steht, und der Ventilsitz (21) ein zweites Durchgangsloch (217) aufweist, das mit dem Kanal (211) in Verbindung steht.

4. Anordnung nach Anspruch 3, wobei das erste Durchgangsloch (131) mit der Druckkammer (12) in Verbindung steht und ein Einweg-Magnetventil (50) zwischen dem ersten Durchgangsloch (131) und der Druckkammer (12) vorgesehen ist, um die Druckquelle (P) mit dem ersten Durchgangsloch (131) zu verbinden und dadurch die Bildung eines Rückführungsdurchgangs in dem Moment zu ermöglichen, in dem der Schaftabschnitt (32) aus der Kolbenkammer (11) mit der beschleunigten Geschwindigkeit herausgefahren wird, oder um die Druckquelle (P) in einer entgegengesetzten Richtung mit der Kolbenkammer (11) zu verbinden, um den Kolbenabschnitt (31) so zu drücken, dass er sich in die Kolbenkammer (11) zurückzieht, und dadurch die Bildung eines Rückführungsdurchgangs im zweiten Durchgangsloch (217) zu ermöglichen.

5. Anordnung nach Anspruch 4, wobei der Ventilschaft (22) einen hinteren Sicherungsring (224) an einem Ende benachbart zum Segment mit kleinem Durchmesser (221) und gegenüber dem vorderen Sicherungsring (222) aufweist, sodass bei axialer Bewegung des Ventilschafts (22), durch die der vordere Sicherungsring (222) den Kanal (211) schließt, der Kanal (211) mit dem zweiten Durchgangsloch (217) in Verbindung kommt, und bei axialer Bewegung des Ventilschafts (22), durch die der vordere Sicherungsring (222) aus dem Kanal (211) zurückgezogen wird, um den Kanal (211) zu öffnen, der hintere Sicherungsring (224) das zweite Durchgangsloch (217) schließt und dafür sorgt, dass der Kanal (211) und das zweite Durchgangsloch (217) nicht miteinander in Verbindung stehen.

6. Anordnung nach Anspruch 1, wobei der Ventilsitz (21) ein Verbindungsloch (216) aufweist, das mit der Druckkammer (12) in Verbindung steht, und das Verbindungsloch (216) so konfiguriert ist, dass es der Druckquelle (P) ermöglicht, den in die Druckkammer (12) eingebrachten Druck bereitzustellen oder den Druck mit dem vorgegebenen Druck aus der Druckkammer (12) abzulassen.

## Revendications

1. Arrangement comprenant une source de pression (P) et un vérin pneumatique équipé d'un accélérateur (100), qui est relié à la source de pression (P) et qui est entraîné par un milieu de pression fourni par la source de pression (P), le vérin pneumatique équipé d'un accélérateur comprenant :
un bloc-cylindre (10) ayant une chambre de piston (11) et une chambre de pression (12) ;
une vanne de commutation (20), ayant un siège de vanne (21) installé dans le bloc-cylindre (10) et entre la chambre de piston (11) et la chambre de pression (12), le siège de vanne (21) ayant un canal (211) et recevant un dispositif de commande qui met ou non la chambre de piston (11) et la chambre de pression (12) en communication l'une avec l'autre par ouverture ou fermeture du canal (211) ; et
un vérin pneumatique (30), ayant une partie piston (31) reçue dans la chambre de piston (11), et ayant une partie arbre (32) s'étendant vers l'extérieur à partir d'un côté de la partie piston (31) pour être exposée à l'extérieur du bloc-cylindre (10), de telle sorte que, lorsque le canal (211) est fermé par le dispositif de commande, la chambre de piston (11) et la chambre de pression (12) ne sont pas en communication l'une avec l'autre, le milieu de pression fourni dans la chambre de pression (12) par la source de pression (P) est amené à s'accumuler jusqu'à un niveau de pression prédéterminé et, à un moment où le canal (211) est ouvert par le dispositif de commande, la chambre de piston (11) et la chambre de pression (12) entrent en communication l'une avec l'autre, la partie piston (31) est poussée par le milieu de pression au niveau de pression prédéterminé, de telle sorte que la partie arbre (32) est poussée hors de la chambre de piston (11) à une vitesse accélérée,
le dispositif de commande étant une tige de vanne (22) ayant un diamètre, et la tige de vanne (22) étant reçue dans le siège de vanne (21) d'une manière axialement mobile et passant à travers le canal (211), la tige de vanne (22) ayant un segment de petit diamètre (221) le long duquel le diamètre de la tige de vanne est réduit et le segment de petit diamètre (221) étant positionné en correspondance avec le canal (211), la tige de vanne (22) ayant une extrémité adjacente au segment de petit diamètre (221) comportant un anneau de retenue avant (222) de telle sorte que, lorsque la tige de vanne (22) se déplace axialement dans le siège de vanne (21) pour faire entrer l'anneau de retenue avant (222) dans le canal (211), le canal (211) est fermé et, lorsque l'anneau de retenue avant (222) est rétracté à partir du canal (211), le segment de petit diamètre (221) permet au canal (211) de s'ouvrir,
dans le siège de vanne (21) étant définie une chambre de fonctionnement (212) dont les deux extrémités ont un premier passage (213) et un second passage (214), respectivement, pour communiquer avec l'extérieur du siège de vanne (21), la tige de vanne (22) ayant une extrémité comportant une partie d'entraînement (223) qui est reçue dans la chambre de fonctionnement (212), de telle sorte que la source de pression (P) est configurée pour entrer dans la chambre de fonctionnement (212) par l'intermédiaire du premier passage (213) et pour pousser la partie d'entraînement (223), puis entraîner la tige de vanne (22) à se déplacer axialement pour amener l'anneau de retenue avant (222) à entrer dans le canal (211) de façon à fermer le canal (211), et
**caractérisé par le fait que** la source de pression (P) est également configurée pour entrer dans la chambre de fonctionnement (212) par l'intermédiaire du second passage (214) de façon à repousser la partie d'entraînement (223), puis entraîner la tige de vanne (22) à se déplacer axialement pour rétracter l'anneau de retenue avant (222) à partir du canal (211) de façon à ouvrir le canal (211), et **par le fait que** le premier passage (213) et le second passage (214) sont reliés à une électrovanne (40), laquelle électrovanne (40) est en outre reliée à la chambre de pression (12), de telle sorte que l'électrovanne (40) contrôle le milieu de pression fourni par la source de pression (P) pour fournir la pression par l'intermédiaire du premier passage (213) ou par l'intermédiaire du second passage (214).

2. Arrangement selon la revendication 1, dans lequel le siège de vanne (21) a une bride (215) au premier passage (213), et la bride (215) fait saillie à partir du siège de vanne (21).

3. Arrangement selon la revendication 1, dans lequel le bloc-cylindre (10) a un premier embout (13) à une extrémité de la chambre de piston (11), et le bloc-cylindre (10) a un second embout (14) à une extrémité de la chambre de pression (12), le premier embout (13) ayant un premier trou traversant (131) en communication avec la chambre de piston (11), et le siège de vanne (21) ayant un second trou traversant (217) en communication avec le canal (211).

4. Arrangement selon la revendication 3, dans lequel le premier trou traversant (131) est en communication avec la chambre de pression (12), et une électrovanne unidirectionnelle (50) est disposée entre le premier trou traversant (131) et la chambre de pression (12), de façon à faire communiquer la source de pression (P) avec le premier trou traversant (131), et permettre ainsi la formation d'un passage de retour au moment où la partie arbre (32) est étendue à l'extérieur de la chambre de piston (11) à la vitesse accélérée, ou à relier la source de pression (P) à la chambre de piston (11) dans une direction opposée de façon à pousser la partie piston (31) à se rétracter dans la chambre de piston (11), et permettre ainsi la formation d'un passage de retour dans le second trou traversant (217).

5. Arrangement selon la revendication 4, dans lequel la tige de vanne (22) a un anneau de retenue arrière (224) à une extrémité adjacente au segment de petit diamètre (221) et opposé à l'anneau de retenue avant (222) de telle sorte que, lorsque la tige de vanne (22) se déplace axialement pour amener l'anneau de retenue avant (222) à fermer le canal (211), le canal (211) se met en communication avec le second trou traversant (217), et lorsque la tige de vanne (22) se déplace axialement pour rétracter l'anneau de retenue avant (222) à partir du canal (211) pour amener le canal (211) à s'ouvrir, l'anneau de retenue arrière (224) ferme le second trou traversant (217) et empêche le canal (211) et le second trou traversant (217) de communiquer l'un avec l'autre.

6. Arrangement selon la revendication 1, dans lequel le siège de vanne (21) a un trou de communication (216) communiquant avec la chambre de pression (12), et le trou en communication (216) est configuré pour permettre à la source de pression (P) de fournir la pression dans la chambre de pression (12), ou pour permettre à la pression, à la pression prédéterminée, d'être libérée de la chambre de pression (12).
